# EUROPÄISCHE PATENTSCHRIFT

(11) **EP 2 132 974 B1**
(45) Veröffentlichungstag und Bekanntmachung des Hinweises auf die Patenterteilung: **18.07.2012**
(21) Anmeldenummer: 09155089.7
(22) Anmeldetag: 13.03.2009
(51) Int. Cl.: A01D 41/127

(54) **Landwirtschaftliche Erntemaschine**
Agricultural harvester
Moissonneuse agricole

(30) Priorität: 12.06.2008 DE 102008027906
(43) Veröffentlichungstag der Anmeldung: 16.12.2009
(73) Patentinhaber: CLAAS Selbstfahrende Erntemaschinen GmbH, 33428 Harsewinkel (DE)
(72) Erfinder: Bönig, Dr., Ingo, 33330 Gütersloh (DE); Haffert, Prof. Dr., Andreas, 33334 Gütersloh (DE)

(56) Entgegenhaltungen:
- EP-A- 0 586 999
- EP-A- 1 297 733
- EP-A- 2 042 019

## Beschreibung

Die Erfindung betrifft eine landwirtschaftliche Erntemaschine gemäß dem Oberbegriff von Anspruch 1.

Unerlässlich für den Bediener einer Erntemaschine ist es, die Parameter der Maschinenkomponenten richtig einzustellen, um einen Emteprozess mit einem gewünschten Emteziel am Ende der Ernteprozesskette erreichen zu können, so dass bei der heutigen Ernte von Erntegut, wie z.B. Gras oder Silomais, es üblich ist, dass vor und während der Abarbeitung eines Feldes vom Bediener die Einstellung von Betriebsparameter, wie z.B. die Einstellung der Schnittlänge, erfolgt. Dabei basiert die Einstellung der Betriebsparameter im Wesentlichen auf das Erfahrungswissen des Bedieners. Da jedoch in der Ernteprozasskette neben den Erntemaschinen weitere Arbeitsfahrzeuge, wie z.B. Transportfahrzeuge und Verdichtungsfahrzeuge im Silo zum Einsatz kommen, bestehen sehr komplexe Zusammenhänge zwischen den am Emteprozess beteiligten Fahrzeugen und deren Einfluss auf das gewünschte Emteziel am Ende der Ernteprozesskette, wie beispielhaft die gewünschte Verdichtung von Erntegut in einem Silo, so dass selbst erfahrene Bediener nicht genau abschätzen können, ob die von ihm gewählten Betriebsparameter wirklich zu dem gewünschten Erntezlel führen. Insbesondere ist der herangezogene Vergleich eines Ist-Wertes einzelner Betriebsparameter mit einem Sollwert (=Idealwert) für den jeweiligen Betriebsparameter wenig aussagekräftig über die Erreichbarkeit eines gewünschten Ernteziels am Ende der Emteprozesskette.

Um diesem Problem zu begegnen, sind aus dem Stand der Technik eine Reihe von Möglichkeiten bekannt geworden, die den Bediener der landwirtschaftlichen Erntemaschine bei der Wahl der optimalen Betriebsparameter unterstützen sollen. Beispielhaft ist aus der EP 1297 733 A1 ein Verfahren zur Ermittlung Von Erntemaschineneinstellungen bekannt, bei dem die Erntemaschine im Arbeitseinsatz zunächst mit einer annähernd gleichbleibenden Erntegutmenge beaufschlagt wird und das sich mit einer gewissen Zeitverzögerung einstellende Arbeitsergebnis aufgezeichnet und gemeinsam mit den zugehörigen Betriebsparametern der Arbeitsaggregate abgespeichert wird. Nun kann der Bediener einen Betriebsparameter eines Arbeitsaggregates verändern und die Erntemaschine beginnt erneut mit dem Erntebetrieb, wobei die zuvor beschriebene Aufzeichnung der Arbeitsergebnisse und anschließende Speicherung in Verbindung mit den zugehörigen Einstellparametern wiederholt wird. Nun werden die beiden aufgezeichneten Arbeitsergebnisse miteinander verglichen und die Betriebsparameter des besseren Arbeitsergebnisses für die Einstellung der Arbeitsaggregate herangezogen. Nachteilig an dem Verfahren ist es, dass aufgrund des Zeitversatzes zwischen dem jeweiligen Beginn des Ernteeinsatzes und der Erfassung des erreichten Arbeitsergebnisses ein sehr hoher Zeitaufwand zur Optimierung der Betriebsparameter notwendig ist. Im Weiteren ist nachteilig, dass der Bediener mehrfach versuchen muss, einen annähernd konstanten Erntegutdurchsatz zu erreichen, um die erreichten Arbeitsergebnisse bei unterschiedlichen Betriebsparametern miteinander vergleichen zu können. Eine zuverlässige Prognose darüber, ob ein gewünschtes Ernteziel erreichbar ist, ist jedoch nicht möglich. Dies erfordert ein hohes Maß an Erfahrung und Können von dem Bediener und benötigt ein hohen Zeitaufwand. Ein weiteres Beispiel einer Erntemaschineneinstellung ist in der US 5 586 033 offenbart, in der ein Steuersystem ein neuronales Netzwerkmodell der Erntemaschine mit Daten trainiert. Das Modell wird dann benutzt, die Einstellungen der Erntemaschine festzulegen. Neuronale Netze mit großer Kapazität erfordern jedoch einen unerschwinglichen Berechnungsaufwand. Bei dem gegenwärtigen Entwicklungsstatus neuronaler Netzwerktechniken haben große neuronale Netzwerke einen begrenzten praktischen Nutzen in Erntemaschinenanwendungen.

Aufgabe der vorliegenden Erfindung ist es daher, die zitierten Nachteile im Stand der Technik zu vermeiden und Insbesondere eine landwirtschaftliche Erntemaschine gemäß des Oberbegriffs von Anspruch 1 derart weiterzubilden, dass dem Bediener während des laufenden Ernteprozesses auf einfache Weise eine zuverlässige Prognose darüber bereitgestellt wird, wie sich das Erntegut am Ende der Ernteprozesskette mit den gewählten Betriebsparametern verdichten lässt, um, falls notwendig, die erstellte Prognose bei Betriebsparameteranpassungen berücksichtigen zu können.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Idem In einer der landwirtschaftlichen Erntemaschine zugeordneten Speicher- und Auswerteeinrichtung wenigstens ein Solikriterium wiederabrufbar hinterlegt ist und anhand von zumindest eines im aktuellen Ernteprozess ermittelten Erntegut- und Betriebsparameters und dem wenigstens einen Sollkriterium eine Prognose über die Erreichbarkeit eines am Ende der Ernteprozesskette stehenden Ist-Erntezieles abgeleitet wird und die Prognose bei der Anpassung von Betriebsparametern berücksichtigt wird, ist der ungeübter aber auch ein erfahrener Bediener In der Lage abzuschätzen, ob ein gewünschtes Ernteziel prognostisch mit den gewählten Betriebsparametern erreichbar ist und kann die Prognose bei eventuell notwendigen Betriebsparameteranpassungen berücksichtigen, wenn die Prognose nicht mit dem gewünschten Ernteziel übereinstimmt.

Dadurch, dass das wenigstens eine Sollkriterium ein erreichbares Soll-Ernteziel definiert, das den Zusammenhang von wenigstens einem Betriebsparameter und wenigstens einem Erntegutparameter, darstellt, ist sichergestellt, dass der Bediener, insbesondere ein ungeübter, eine sehr zuverlässige Prognose über das erreichbare Ist-Ernteziel erhält und ständig darüber informiert ist, ob die Prognose mit dem gewünschten Ernteziel korrespondiert, so dass er nötigenfalls Betriebsparameteranpassungen vornehmen kann. Erfindungsgemäß handelt es sich bei der landwirtschaftlichen Erntemaschine um einen Feldhäcksler, wobei das Soll-Ernteziel die Verdichtbarkeit von Erntegut darstellt, die sich aufgrund des Zusammenhanges zwischen den Parametern Erntegutart, Erntegutfeuchte und Schnittlänge ergibt. Demnach kann dann in der Speicher- und Auswerteeinrichtung ein Vergleich des Sollkriteriums mit der aktuell gewählten Schnittlänge und der im Ernteprozess ermittelten Erntegutfeuchte erfolgen und prognostiziert werden, ob das gewünschte ErntezIel, nämhich die gewünschte Verdichtung des Erntegutes wie z.B. Mais oder Gras in einem Silo, mit den aktuellen Betriebsparametern erreichbar ist.

Eine überaus genaue Prognose über die Erreichbarkeit eines Ist- Erntezieles wird erreicht, wenn das Soll-Ernteziel auf Expertenwissen beruht, dass z.B. durch eine Vielzahl von Versuchen in einem Prüfstand ermittelt worden und somit statistisch abgesichert ist. Denkbar ist zudem, dass das Expertenwissen auf dem Wissen beruht, dass auf eine Vielzahl von realen Ernteergebnissen oder auf Wissen von vielen Bedienern vom am Ernteprozess beteiligten Maschinen basiert. Vorteilhaft ist das auf Expertenwissen beruhende Soll-Ernteziel in Form wenigstens einer Kennlinie in der Speicher- und Auswerteinheit hinterlegt, so dass die Prognose über das erreichbare Ist-Ernteziel anhand des Vergleichs mit den aktuellen Betriebs- und Erntegutparametern sehr schnell für unterschiedliche Erntebedingungen durchführbar ist.

In einer vorteilhaften Weiterbildung der Erfindung wird dem Bediener die Prognose über ein erreichbares Ist-Erntezlel bewertet angezeigt, so dass der unerfahrene, wie auch der erfahrene Bediener unter Berücksichtigung der aktuellen Betriebs- und Erntegutparameter eine Information über die Qualität des erreichbaren Ist-Erntezieles am Ende der Ernteprozesskette erhält. Um eine genaue Qualitätsaussage zu erhalten, ist wenigstens ein Schwellwert in der Speicher- und Auswerteeinheit hinterlegt, wobei ein Unterschreiten eine negative und ein Überschreiten eine positive Prognose, darstellt, so dass insbesondere der unerfahrene Bediener vorteilhaft selbst keine eigene Einschätzung über die Qualität des erreichbaren Ernteziels vornehmen muss. Dies bedeutet eine zusätzliche Entlastung für den Bediener der Erntemaschine. Um vorteilhaft ein möglichst statistisch abgesichertes Bewertungsergebnis zu erhalten, basiert der Schwellwert ebenfalls auf Expertenwissen, dessen Grundlage eine Vielzahl von Versuche in einem Prüfstand oder eine Vielzahl von realen Ernteergebnissen sein kann, Denkbar ist zudem, dass der Schwellwert von dem Bediener selbst bestimmbar ist und somit insbesondere das Wissen von sehr erfahrenen Bedienern nutzbar ist. Dadurch, dass zur Bestimmung des Schwellwertes wenigstens ein weiterer Betriebsparameter eines am Ernteprozess beteiligten Fahrzeuges herangezogen wird, der vom Bediener selbst über die Eingabe- und Anzeigeneinheit und/oder automatisch über eine Datenübertragungsvorrichtung in der Speicher- und Auswerteeinheit eingegeben werden kann, ist vorteilhaft sichergestellt, dass bei der Erstellung der Prognose, die zur Betriebsparameteranpassung nutzbar ist, nicht nur sich ändernde Bedingungen auf dem Erntefeld selbst, sondern auch solche in der weiteren Ernteprozesskette berücksichtigt werden.

Um den Bediener vorteilhaft einen eigenen Spleiraum bei der Einstellung der Betriebsparameter zu belassen, ist in vorteilhafter Weiterbildung der Erfindung dem Schwellwert eine untere und eine obere Schwellwertgrenze zugeordnet, wobei Werte, die noch innerhalb dieses Schwellwertbereiches liegen, eine positive Prognose über die Erreichbarkeit eines. Ist-Ernteziels darstellen und somit der Bediener informiert ist, dass die Qualität des erreichbaren Ernteziels ausreichend ist

Bei einer vorteilhaften Ausgestaltung der Erfindung werden im Fall einer negativen Prognose über die Erreichbarkeit eines Ist-Ernteziels solche Betriebsparameter auf der Anzeigeeinheit dargestellt, deren Änderung zu einer positiven Prognose führen würden, so dass der Bediener vorteilhaft bei der Wahl der richtigen Betriebsparameter unterstützt wird, Vorteilhaft werden dem Bediener neben den zu ändernden Betriebsparameter auch die korrespondierenden Einsteil-Tendenzen angezeigt, so dass der Bediener gleich in die passende Richtung die Betriebsparametereinstellung vornehmen kann. Eine besondere Entlastung ist für den Bediener dann erreichbar, wenn die Steuereinrichtung unter Berücksichtigung der Prognose in einem solchen Fall automatisch die Einstellung solcher Betriebsparameter vornimmt, die zu einer positiven Prognose führen.

Damit der Bediener der landwirtschaftlichen Erntemaschine die Betriebsparameter und/oder die Erntegutparameter und/oder die Prognose über das erreichbare Ist-Ernteziel und/oder das Bewertungsergebnis schnell erfassen und überblicken kann, sind diese in vorteilhafter Weiterbildung der Erfindung in Form von Zahlen und/oder in Form von Begriffen und/oder in Form von Piktogrammen auf der Anzeigeeinheit anzeigbar.

Weitere vorteilhafte Ausgestaltungen sind Gegenstand weiterer Unteransprüche und werden nachfolgend anhand von Zeichnungen näher erläutert.

Es zeigen:
- Figur 1:: einen Feldhäcksler in einer teilweise geschnittenen Seitenansicht
- Figur 2:: eine Displaydarstellung der Anzeigeneinheit in einer ersten Ausführungsform
- Figur 3:: eine Displaydarstellung der Anzeigeneinheit in einer zweiten Ausführungsform

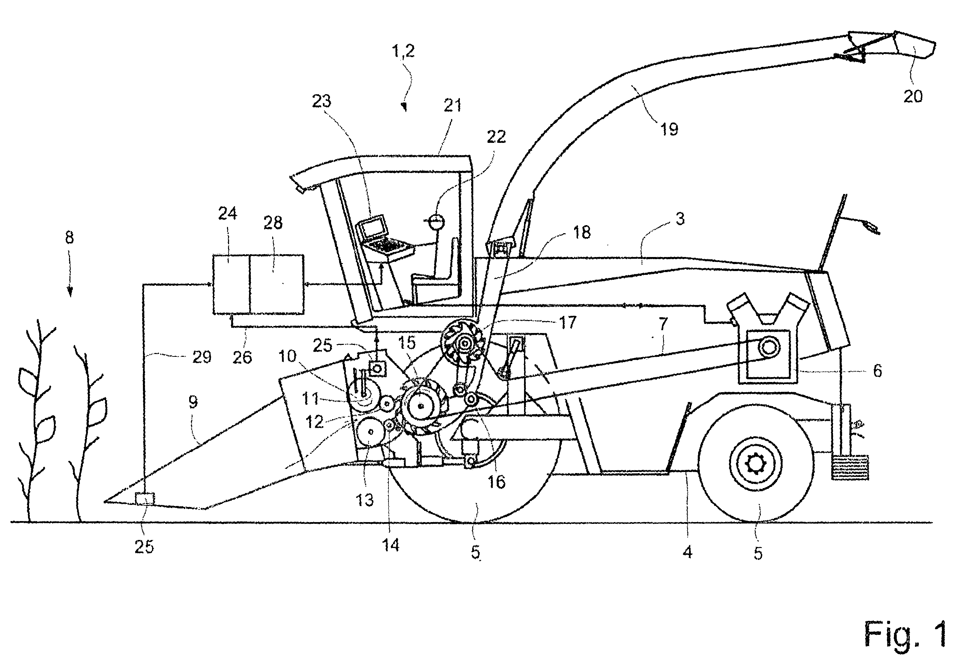

Die In Figur 1 in einer teilweise geschnittenen Seitenansicht als Feldhäcksler 1 dargestellte landwirtschaftliche Erntemaschine 2 weist ein Gehäuse 3 und ein Fahrgestell 4 auf, an dem die Räder 5 angeordnet sind. Ein Motor 6 dient als Antrieb, der über einen Riemen 7 mit den Arbeitsorganen des Feldhäckslers 1 in Verbindung steht.

Das zu erntende Erntegut 8 wird über ein Vorsatzgerät 9 geschnitten und aufgenommen. In Anschluss an das Vorsatzgerät 9 ist die Einzugsvorrichtung 10 vorgesehen, welche hier im Ausführungsbeispiel über zwei untere Einzugs- bzw. Vorpresswalzen 11, 12 und zwei obere Einzugs- bzw. Vorpresswalzen 13, 14 verfügt, die an einem Rahmen oder Gehäuse 3 angeordnet sind.

Um im Ernteprozess eine definierte Schnittlänge des Erntegutes 8 zu gewährleisten, werden bei dem Feldhäcksler 1 auf dem Weg des Emteguts 8 durch die Erntemaschine 2 laufend die Vortriebsgeschwindigkelten erhöht. Das bedeutet, dass die Vorpress- und Einzugswalzen 11, 12, 13, 14 mit einer geringeren Umfangsgeschwindigkeit angetrieben werden als die Häckseltrommel 15, die wiederum mit einer geringeren Umfangsgeschwindigkeit als die Nachzerkleinerungseinrichtung 16 betrieben wird. Der Nachbeschleuniger 17 transportiert das zu befördernde Erntegut 8 durch den Förderschacht 18 und durch den Auswurfkrümmer 19 und an der Auswurfkrümmerklappe 20 vorbei hinaus auf einen benachbart zu dem Feldhäcksler 1 angeordneten und hier nicht dargestellten Transportwagen, der das geerntete und bearbeitete Erntegut 8 beispielhaft zu einem hier nicht dargestellten Silo abtransportiert.

Der Feldhäcksler 1 verfügt über eine Fahrerkabine 21, die Platz für den Bediener 22 bietet. Eine Eingabe- und Anzeigeneinheit 23 steht dem Bediener 22 zur Verfügung, um die Betriebsparametereinstellungen vornehmen zu können, und um den Bediener 22 über die aktuellen Betriebs bzw. Erntebedingungen zu informieren,

Eine Steuereinrichtung 24 dient zur Steuerung der an sich bekannten und hier nicht näher ausgeführten Arbeitsorgane des Feldhäckslers 1. Die Steuereinrichtung 24 kann mit einem oder mehreren Sensoren 25 über Leitungen 26 verbunden sein, um den Feldhäcksler 1 insgesamt und beispielhaft die Einzugsvorrichtung 10 zur Regelung der Schnittlänge des Erntegutes 8 entsprechend über an sich bekannte und hier nicht dargestellte Aktoren zu steuern. Zudem ist denkbar, dass der Feldhäcksler 1 mittels eines an sich bekannten, jedoch hier nicht dargestellten Datenübertragungssystems wie beispielsweise das Internet, Funknetze, Mobiltelefone oder Speicherkarten mit weiteren am Ernteprozess beteiligten Fahrzeugen, wie z.B. weiteren Erntemaschinen, Transportfahrzeugen oder auf einem Silo arbeitende Verdichtungsfahrzeuge vernetzt ist.

Um ein am Ende des Ernteprozesses stehendes gewünschtes Ernteziel, nämlich die gewünschte Verdichtung des Erntegutes 8 In einem Silo erreichen zu können, sind vor Beginn des Ernteprozesses, z.B. der Aberntung eines Maisfeldes, vom Bediener 22 neben der Einstellung weiterer Betriebsparameter auch die Einstellung der Schnittlänge des Erntegutes 8 vorzunehmen. Dabei erfolgt die Schnittlängeneinstellung In Abhängigkeit von den vorliegenden Erntebedingungen, insbesondere der Erntegutfeuchte, welche mittels eines im Bereich des Vorsatzgerätes 10 angeordneten Feuchtesensors 27 ermittelbar ist. Zudem hängt die Schnittlängeneinstellung von der gewünschten Verdichtung des Erntegutes im Silo ab. Die von den Sensoren 25, 27 generierten Signale werden In einer dem Feldhäcksler 1 zugeordneten Speicher- und Auswerteeinheit 28 ausgewertet und über die Eingabe- und Anzeigeneinheit 23 dem Bediener 22 visualisiert. Im Falle von sich ändernden Erntebedingungen wird der erfahrene Bediener 22 eine entsprechende Anpassung der Betriebsparameter vornehmen, so dass beispielhaft bei einer sich im Ernteprozess ändernden Erntegutfeuchte der erfahrene Bedlener 22 tendenziell, die Schnittlänge verkürzen wird, wenn das Erntegut trockener wird, damit das Erntegut in einem Silo noch ausreichend verdichtet werden kann. Da in der Ernteprozesskette neben der Erntemaschine 2 jedoch weitere hier nicht dargestellte Arbeitsfahrzeuge, wie z.B. Transportfahrzeuge und Verdichtungsfahrzeuge im Silo zum Einsatz kommen, bestehen sehr komplexe Zusammenhänge zwischen den am Ernteprozess beteiligten Fahrzeugen und deren Einfluss auf das gewünschte Ernteziel am Ende der Ernteprozesskette, so dass selbst erfahrene Bediener 22 einer landwirtschaftlichen Erntemaschine nicht genau abschätzen können, ob mit den gewählten Betriebsparameter unter Berückslchtlgung der im Erntebetrieb vorliegenden Erntegutparametern wirklich das gewünschte Ernteziel am Ende der Ernteprozesskette erreichbar ist, dass der gewünschten Verdichtung des Erntegutes im Silo entspricht.

Hier setzt nun die Erfindung ein. In der dem Feldhäcksler 1 zugeordneten Speicherund Auswerteeinrichtung 28 ist wenigstens ein Sollkriterium wiederabrufbar hinterlegt, dass vorteilhaft ein erreichbares Soll-Erntezlel definiert, das den Zusammenhang von wenigstens einem Betriebsparameter und wenigstens einem Erntegutparameter darstellt, wobei das Sollkriterium, um eine statistisch abgesicherte Grundlage zu haben, insbesondere auf Expertenwissen beruht, dass z.B. durch eine Vielzahl von Versuchen in einem Prüfstand ermittelt worden ist. Vorstellbar ist zudem, dass das Expertenwissen auf dem Wissen von erfahrenen Bedienern 22 von landwirtschaftlichen Erntemaschinen 2 basiert. Das erreichbare Soll-Ernteziel ist die Verdichtbarkeit des Erntegutes 8, die aufgrund des Zusammenhangs zwischen dem Erntegutparameter Feuchte und dem Erntemaschinenparameter Schnittlänge des Erntegutes 8 besteht. Mittels des im Bereich des Vorsatzgerätes 10 der Erntemaschine 2 angeordneten Feuchtesensors 27 wird im Ernteprozess die Erntegutfeuchte sensiert und das entsprechende Signal der Speicher- und Auswerteeinheit 28 über eine Leitung 29 zugeführt. Die Speicher- und Auswerteeinheit 28 vergleicht das von dem Feuchtesensor 27 erzeugte Signal unter Berücksichtigung der aktuell eingestellten Schnittlänge, die vom Bediener 22 über die Eingabe- und Anzeigeneinheit 23 in die Speicher- und Auswerteeinrichtung 28 eingebbar ist, mit dem in der Speicher- und Auswerteeinrichtung 28 hinterlegten Sollkriterium und erstellt daraus eine Prognose über das entsprechend erreichbare Ist-Ernteziel, das unter den im Ernteprozess vorhandenen Erntebedingungen mit den gewählten Betriebsparametern erreichbar ist, so dass, wenn die Prognose nicht dem gewünschten Ernteziel entspricht, die Prognose erfindungsgemäß bei der notwendigen Betriebsparameteranpassung der landwirtschaftlichen Erntemaschine berücksichtigt wird. Es ist vorstellbar, dass das Expertenwissen, welches den Zusammenhang zwischen wenigstens einem Betriebsparameter und wenigstens einem Erntegutparameter darstellt, als Kennlinie in der Speichert- und Auswerteeinrichtung 28 hinterlegt ist. Die hier nicht näher dargestellte Kennlinie stellt dabei die erreichbare Verdichtung von Erntegut dar, welche aufgrund des Zusammenhanges zwischen der Erntegutfeuchte und der Schnittlänge des Erntegutes 8 besteht, die beispielhaft auf eine Vielzahl von Verdichtungsversuchen in einem Prüfstand basieren kann, um eine statistisch abgesicherte Prognose zu erhalten. Denkbar ist zudem, dass für jede im Ernteprozess wählbare Schnittlänge eine solche auf Expertenwissen basierende Kennlinie als Sollkrlterlum in der Speicher- und Auswerteeinrichtung 28 hinterlegt ist. Damit die Prognose dem Bediener 22 eine genaue Aussage über die Qualität des erreichbaren Ist-Ernteziels liefert, kann zusätzlich in der Speicher- und Auswerteeinrichtung 28 widerabrufbar ein Schwellwert zugeordnet sein, wobei ein Unterschreiten eine nicht ausreichende und ein Überschreiten eine ausreichende Qualität des erreichbaren Ist-Ernteziels darstellt. Um auch hier ein möglichst statistisch abgesichertes Ergebnis zu erhalten, kann der Schwellwert entsprechend dem Sollkriterium auf Expertenwissen beruhen. Um das Wissen von sehr erfahrenen Bedienern 22 bei der Qualitätsaussage nutzen zu können, kann der Schwellwert vom Bediener 22 selbst bestimmt werden. Vorstellbar ist zudem, dass zur Bestimmung des Schwellwertes wenigstens ein Betriebsparameter eines weiteren am Ernteprozess beteiligten Fahrzeuges herangezogen wird, der vom Bediener 22 selbst über die Eingabe- und Anzeigeneinheit 23 und/oder automatisch über eine hier nicht naher dargestellte Datenübertragungsvorrichtung in die Speicher- und Auswerteeinheit 28 eingegeben werden kann. Dies bietet den Vorteil, dass bei der Erstellung der Prognose, die bei der getrlebsparameteranpassung berücksichtigt wird, nicht nur sich ändernde Bedingungen auf dem Erntefeld selbst, sondern auch solche in der weiteren Ernteprozesskette in die Prognose mit einfließen. Beispielhaft kann so ein Parameter eines auf einem Silo arbeitenden Verdichtungsfahrzeuges bei der Erstellung der Prognose und somit bei der Betriebsparameteranpassung der landwirtschaftlichen Erntemaschine 2 berücksichtigt werden. Dies kann beispielhaft die maximale Verdichtungskraft sein, die das Verdichtungsfahrzeug zur Verdichtung des Erntegutes 8 in einem Silo aufbringen kann. Ergibt die Prognose, dass unter Berücksichtigung der aktuellen Betriebs- und Erntegutparameter das gewünschte ist-Erntziel nicht erreichbar ist, werden vorteilhaft solche Betriebsparameter auf der Eingaben- und Anzeigeneinheit 23 dargestellt, deren Änderung zu einer positiven Prognose führen würden, so dass der Bediener 22 vorteilhaft bei der Wahl der richtigen Betriebsparameter unterstützt wird. Vorteilhaft werden dem Bediener 22 neben den zu ändernden Betriebsparameter selbst, auch die korrespondierenden Einstell-Tendenzen angezeigt, so dass der Bedlener 22 gleich in die richtige Richtung die Betriebsparameteranpassung vornimmt. Vorstellbar ist auch, dass die Betriebsparameteranpassung automatisch erfolgt, wobei im Falle einer negativen Prognose, von der mit der Speicher- und Auswerteeinheit 28 in Verbindung stehenden Steuereinrichtung 24 die entsprechenden Signale an die an sich bekannten Aktoren der Arbeitsorgane weitergeleitet werden, um durch die Betriebsparameteranpassung, das gewünschte Ernteziel erreichen zu können.

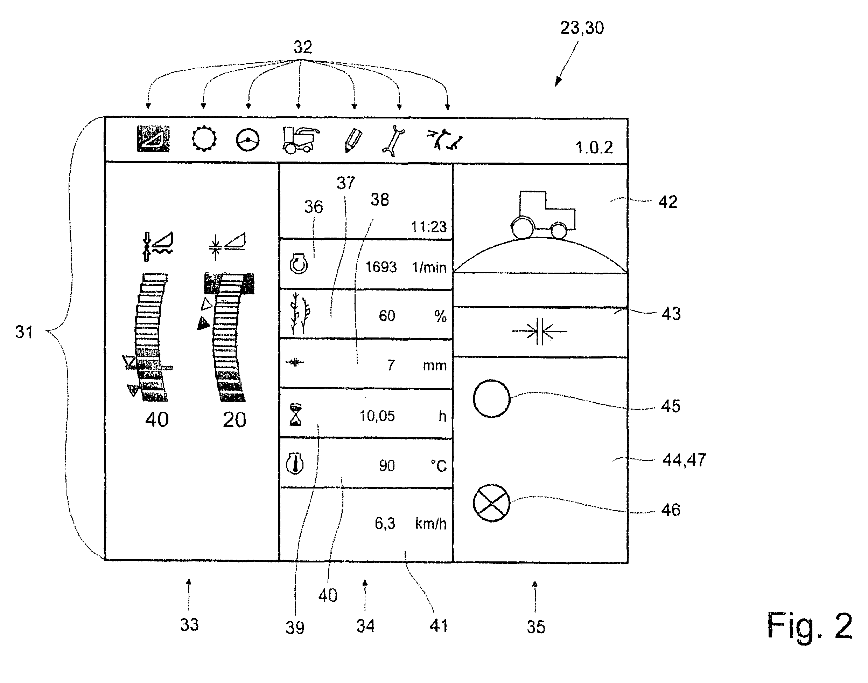

In Fig. 2 ist beispielhaft eine Darstellung von der in der Speicher- und Auswerteeinheit abgeleiteten Prognose über die Erreichbarkeit eines ist-Ernteziels auf dem Bildschirm 30 In einer Eingaben- und Anzeigeneinheit 23 angezeigt, wobei das erreichbare Ist-Ernteziel die erreichbare Verdichtung von Erntegut in einem Silo ist und das in der Speicher- und Auswerteinheit hinterlegte Sollkriterium als Soll-Ernteziel die maximal erreichbare Verdichtbarkeit von Erntegut darstellt, die aufgrund des Zusammenhanges zwischen der Erntegutfeuchte und der Erntegutschnittlänge besteht, welches vorteilhaft auf Expertenwissen beruht, das in einer Vielzahl von Versuchen in einem Verdichtungsprüfstand ermittelt worden ist. Die in Fig. 2 dargestellte Eingaben- und Anzeigeneinheit 23 wird von einer Basisanzeigefläche 31 ausgefüllt. Dabei sind Im oberen Bereich der Basisanzeigefläche 31 verschiedene mit Betriebs- und/oder Erntegutparametern hinterlegte Funktionsfenster 32 angezeigt. Diese müssen nicht gleichzeitig auf der Basisanzeigefläche 31 dargestellt werden, sondern können über Menüs und Untermenüs abrufbar sein, in denen sinnvoll zusammenfassbare Betriebs- und/oder Erntegutparameter zusammengefasst sein können. Die Belegung der einzelnen Funktionsfenster 32 mit Betriebs- und/oder Erntegutparameter ist vorn Bediener frei wählbar. Im Weiteren weist die Eingabe- und Anzeigeneinheit 23 drei Blöcke 33, 34, 35 auf. Ein erster Block 33 und ein zweiter Block 34 zeigen eine Auswahl an Betriebs- und Erntegutparameter der sich im Erntebetrieb befindenden Erntemaschine an. Die Funktionsfenster 36, 37, 38, 39, 40, 41 zeigen beispielhaft die Motordrehzahl, die sensierte Erntegutfeuchte, die aktuelle Schnittlängeneinstellung, die Betriebsstundenzahl, die Motoröltemperatur und die Fahrgeschwindigkeit als Zahlenwert mit entsprechender Einheit. Der dritte Block 35 visualisiert in Funktionsfenster 42 das zu erreichende Ist-Ernteziel am Ende der Ernteprozesskette, das im Ausführungsbeispiel die nicht näher spezifizierte erreichbare Verdichtung des Erntegutes im Silo und buldhaft durch ein auf einen Silo , fahrenden Traktor dargestellt ist, Im darunter sich befindenden Funktionsfenster 43 ist der Betriebsparameter Schnittlängeneinstellung dargestellt, da dieser Betriebsparameter variabel ist und maßgeblichen Einfluss auf die erreichbare Verdichtung von Erntegut in einem Silo hat. Funktionsfenster 44 zeigt dem Bediener die Prognose über die erreichbare Verdichtung des Erntegutes im Silo an, welche aus dem Vergleich der aktuellen Schnittlänge und der aktuellen Erntegutfeuchte mit dem in der Speicher- und Auswerteeinheit auf Expertenwissen basierenden Sollkriterium erfolgt, dass als Soll-Ernteziel die maximal erreichbare Verdichtung von Erntegut darstellt, die aufgrund des Zusammenhangs von Erntegutfeuchte und Erntegutlänge besteht. Beispielhaft ist hier die Prognose als ein ein rotes und ein grünes Feld 45, 46 aufweisendes Ampelfeld 47 ausgeführt, wobei das hier angekreuzte grüne Feld 46 den Bediener darüber informiert, dass unter Berücksichtigung der im Funktionsfenster dargestellten aktuellen Erntegutfeuchte von 60 % und die im Funktionsfenster gezeigte vom bediener eingestellte Schnittlänge von 7 mm unter Berücksichtigung des In der Speicher- und Auswerteeinheit hinterlegten Sollkriteriums prognostisch eine ausreichende spätere Verdichtung des Erntegutes im Silo erreicht werden kann, so dass unter den aktuellen Bedingungen keine Betriebsparameteranpassung, Insbesondere keine Änderung der in Funktionsfenster 38 dargestellten Schnittlänge, vom Bediener vorgenommen werden muss.

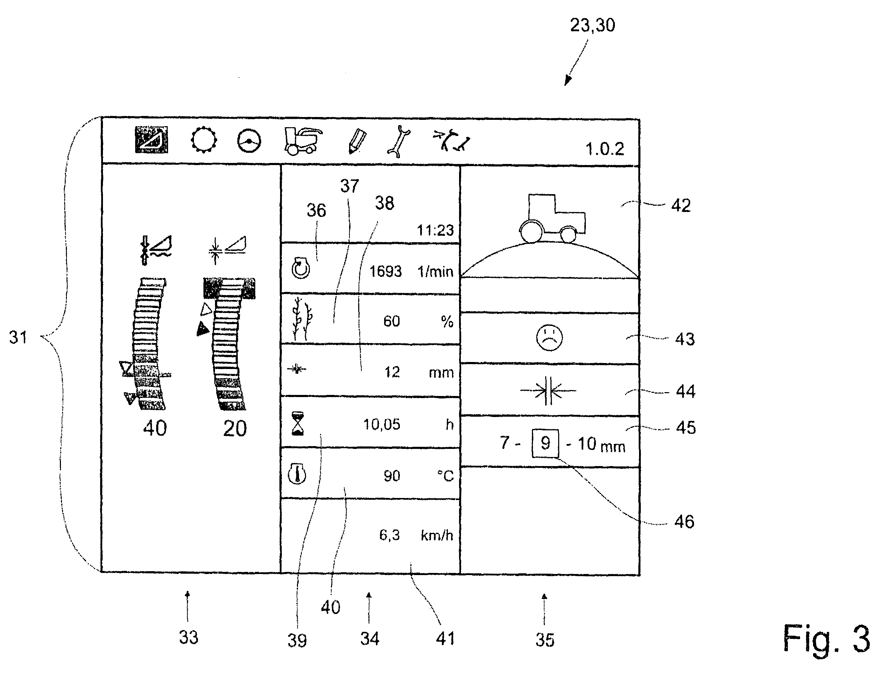

Fig. 3 zeigt eine zweite Ausgestaltung der Darstellung der Prognose auf dem Bildschirm 30 der Eingaben- und Anzeigeneinheit 23. Die Eingabe- und Anzeigeneinheit 23 entspricht der in Fig. 2 dargestellten Eingaben- und Anzeigeneinheit 23, wobei der auf der rechten Seite dargestellte Block 35 auf der Basisanzeigefläche 31 sich von dem in Fig. 2 dargestellten Block 35 dahingehend unterscheidet, dass dem Bediener die Prognose über das erreichbare Ist-Ernteziel In einer detaillierteren Form angezeigt und die Prognose über das erreichbare Ist-Ernteziel negativ ist. Entsprechend zu Fig. 1 zeigen der erste und der zweite auf der Basisanzeigefläche 31 dargestellte Block 33, 34 eine Auswahl an Betriebs- und Erntegutparametern der sich Erntebetrieb befindenden Erntemaschine an, wobei die Auswahl seitens des Bedieners erfolgen kann, Die Funktionsfenster 36, 37, 38, 39, 40, 41 zeigen beispielhaft die Motordrehzahl, die sensierte Erntegutfeuchte, die aktuell Schnittlängenelnstellung, die Betriebsstundenzahl, die Motoröltemperatur und die Fahrgeschwindigkeit als Zahlenwert mit entsprechender Einheit. Der dritte Block 35 visualisiert In Funktionsfenster 42 das zu erreichende Ist-Ernteziel am Ende der Ernteprozesskette, das im Ausführungsbeispiel die Verdichtung des Erntegutes in einem Silo und bildhaft durch einen auf einem Silo fahrenden Traktor dargestellt ist. Das unterhalb von Funktionsfenster 42 liegende Funktionsfenster 43 zeigt die Bewertung der Prognose in Form eines Symbols, hier ein trauriges Gesicht, welches dem Bediener darüber informiert, dass die Prognose über das erreichbare Ist-Ernteziel riegativ ist. Die Benutzung anderer an sich bekannter Bewertungssymbole zur Darstellung von negativen oder positiven Ereignissen ist vorstellbar. Im darunter liegenden Funktionsfenster 44 ist dem Bediener nun der Betriebsparameter angezeigt, im Beispiel die Schnittlängeneinstellung, dessen Anpassung vorzunehmen ist, damit die Prognose über das erreichbare ist-Ernteziel am Ende der Ernteprozesskette eine positive Bewertung ergibt. Im Funktionsfenster 45 ist dem Bediener der Betriebsparameterwert für die Schnlttlängenelnstellung als umrahmte Zahl 46, hier die Zahl neun dargestellt, den insbesondere der ungeübte Bediener gezielt übernehmen kann, ohne die Anpassung weiterer Betriebsparameter vornehmen zu müssen. Der Bediener kann somit sicher serin, dass mit der Betriebsparameteranpassung, dass gewünschte Ernteziel, die gewünschte Verdichtung des Erntegutes In einem Silo, erreichbar ist. Um insbesondere dem erfahrenen Bediener bei der Anpassung eines Betriebsparameters einen Spielraum zu belassen, ist dem in der Speicher- und Auswerteeinriohtung widerabrufbar hinterlegtem Schwellwert eine obere und eine untere Schwellwertgrenze zugeordnet, die im Funkflonsfenster 45 dem Bediener durch die Zahlenwerte zehn und sieben und entsprechender Einheit angezeigt sind. Solange die Anpassung des Betriebsparameters schnittlänge innerhalb dieses Bereiches vorgenommen wird, weiß der Bediener, dass die Qualität des erreichbaren Ist-Erntezleis, hier die gewünschte Verdichtung des Erntegutes in einem Silo, noch ausreichend ist. Dem Bediener verbleibt dadurch beispielhaft die Möglichkeit, innerhalb dieses Einstellbereichs den Einstellwert zu übernehmen, mit dem die Erntemaschine am energieeffizientesten betreibbar ist.

Um eine hier nicht näher dargestellte automatische, den Bediener völlig entlastende Betriebsparameteranpassung zu ermöglichen, ist es vorstellbar, dass von der Speicher und Auswerteeinheit ein entsprechendes Signal an die Steuereinrichtung, die zur Steuerung der an sich bekannten hier nicht dargestellten für die Schnittlängeneinstellung zuständigen Aktoren der Erntemaschine gesendet wird und aufgrund der vorliegenden negativen Prognose, eine automatische Anpassung des Betriebsparameters Schnittlänge vornimmt, welche innerhalb der in Funktionsfenster 45 dargestellten Schnittlängenwerte liegt.

### Bezugszeichenliste:

- 1: Selbstfahrender Feldhäcksler
- 2: Landwirtschaftliche Erntemaschine
- 3: Gehäuse
- 4: Fahrgestell
- 5: Räder
- 6: Motor
- 7: Riemen
- 8: Erntegut
- 9: Vorsatzgerät
- 10: Einzugsvorrichtung
- 11: Einzugs- und Vorpresswalze
- 12: Einzugs- und Vorpresswalze
- 13: Einzugs- und Vorpresswalze
- 14: Einzugs- und Vorpresswalze
- 15: Häckseltrommel
- 16: Nachzerkleinerungseinrichtung
- 17: Nachbeschleuniger
- 18: Förderschacht
- 19: Auswurfkrümmer
- 20: Auswurfkrommerklappe
- 21: Fahrerkabine
- 22: Bediener
- 23: Eingabe- und Anzeigeneinhelt
- 24: Steuereinrichtung
- 25: Sensor
- 26: Leitung
- 27: Feuchtesensor
- 28: Speicher- und Auswertainrichtung
- 29: Leitung
- 30: Bildschirm
- 31: Basisanzeigefläche

- 32: Funktionsfenster
- 33: Block
- 34: Block
- 35: Block
- 36: Funktionsfenster
- 37: Funktionsfenster
- 38: Funktionsfenster
- 39: Funktionsfenster
- 40: Funktionsfenster
- 41: Funktionsfenster
- 42: Funktionsfenster
- 43: Funktionsfenster
- 44: Funktionsfenster
- 46: Rotes Feld
- 46: Grünes Feld
- 47: Ampelfeld

## Patentansprüche

1. Landwirtschaftliche Erntemaschine mit unterschiedlichen Arbeitsorganen, einer Eingabe- und Anzeigeneinheit, einer Speicher- und Auswerteeinheit und einer Steuereinrichtung zur Beeinflussung von einstellbaren Betriebsparametern der Arbeitsorgane, wobei In der Speicher- und Auswerteeinrichtung (28) widerabrufbar wenigstens ein Sollkriterium hinterlegt ist und anhand zumindest eines im Ernteprozess ermittelten Emtegut- und Betriebsparameters und dem wenigstens einen Sollkriterium eine Prognose über die Erreichbarkeit eines Ist-Emtezieles abgeleitet wird und wobei die Prognose bei der Einstellung der Betriebsparameter berücksichtigt wird,
**dadurch gekennzeichnet, dass** die landwirtschaftliche Emtemaschine (2) ein Feldhäcksler (1) ist,
wobei das wenigstens eine Sollkriterium wenigstens ein erreichbares Soll-Ernteziel definiert, das den Zusammenhang von wenigstens einem Betriebsparameter und wenigstens einem Erntegutparameter darstellt,
wobei das Soll-Ernteziel die Verdichtbarkeit von Erntegut ist, die aufgrund des Zusammenhangs von der Erntegutart, der Erntegutfeuchte und der Erntegutlänge besteht.

2. Landwirtschaftliche Erntemaschine nach wenigstens einem der vorhergehenden Ansprüche,
**dadurch gekennzeichnet, dass**
das Soll-Ernteziel auf Expertenwissen beruht,

3. Landwirtschaftliche Erntemaschine nach wenigstens einem der vorhergehenden Ansprüche,
**dadurch gekennzeichnet, dass**
das Soll-Erntezlel In Form wenigstens einer Kennlinie in der Speicher und Auswerteeinheit (28) hinterlegt ist.

4. Landwirtschaffliche Erntemaschine nach wenigstens einem der vorhergehenden Ansprüche,
**dadurch gekennzeichnet, dass**
die Prognose über die Erreichbarkeit eines Ist-Ernteziels bewertet auf der Eingaben- und Anzeigeneinheit (23) angezeigt wird.

5. Landwirtschaftliche Erntemaschine nach wenigstens einem der vorhergehenden Ansprüche,
**dadurch gekennzeichnet, dass**
wenigstens ein Schwellwert in der Speicher- und Auswerteeinrichtung (28) hinterlegt ist, wobei ein Unterschreiten des Schwellwertes eine negative und ein Überschreiten des Schwellwertes eine positive Prognose darstellt.

6. Landwirtschaftliche Erntemaschine nach wenigstens einem der vorhergehenden Ansprüche,
**dadurch gekennzeichnet, dass**
der Schwellwert vom Bediener (22) festgelegt wird und/oder auf Expertenwissen beruht.

7. Landwirtschaftliche Erntemaschine nach wenigstens einem der vorhergehenden Ansprüche,
**dadurch gekennzeichnet, dass**
für die Bestimmung des Schwellwertes zusätzlich ein Betriebsparameter eines weiteren am Ernteprozess beteiligten Fahrzeuges in der Speicher- und Auswerteeinrichtung (28) hinterlagbar ist, wobei der Betriebsparameter vom Bediener (22) selbst über eine Eingabe- und Anzeigeneinheit (23) und/oder automatisch aber eine Datenübertragungsvorrichtung in die Speicher- und Auswerteeinrichtung (23) eingegeben wird.

8. Landwirtschaftliche Erntemaschine nach wenigstens einem der vorhergehenden Ansprüche,
**dadurch gekennzeichnet, dass**
dem wenigstens einen Schwellwert zumindest eine untere und eine obere Schwellwertgrenze zugeordnet ist.

9. Landwirtschaftliche Erntemaschine nach wenigstens einem der vorhergehenden Ansprüche,
**dadurch gekennzeichnet, dass**
Im Fall einer negativen Prognose solche Betriebsparameter auf der Eingabenund Anzeigeneinheit (23) angezeigt werden, deren Anpassung zu einer positiven Bewertung führen und/oder von der Steuereinrichtung (24) unter Berücksichtigung der Prognose eine automatische Betriebsparameteranpassung vorgenommen wird.

10. Landwirtschaftliche Erntemaschine nach Anspruch 9,
**dadurch gekennzeichnet dass**
zusätzlich zu den auf der Eingabe- und Anzeigeneinheit (23) dargestellten Betriebsparametern, die Einstell-Tendenzen für die Betriebsparameter visualisiert werden.

11. Landwirtschaftliche Erntemaschine nach einem der vorstehenden Ansprüche,
**dadurch gekennzeichnet, dass**
die Betriebsparameter und/oder die Erntegutparameter und/oder die Prognose über das erreichbare ist-Ernteziel und/oder das Bewertungsergebnis in Form von Zahlen und/oder Begriffen und/oder Piktogrammen auf der Eingeben- und Anzeigeneinheit anzeigbar sind.

## Claims

1. An agricultural harvester comprising different working members, an input and display unit, a memory and evaluation unit and a control device for influencing adjustable operating parameters of the working members, wherein at least one reference criterion is retrievably stored in the memory and evaluation device (28) and a prognosis about the attainability of an actual harvesting aim is derived on the basis of at least one crop material and operating parameter ascertained in the harvesting process and the at least one reference criterion, and wherein the prognosis is taken into account in adjustment of the operating parameters,
**characterised in that** the agricultural harvester (2) is a forage harvester (1),
wherein the at least one reference criterion defines at least one attainable reference harvesting aim representing the relationship of at least one operating parameter and at least one crop material parameter,
wherein the reference harvesting aim is the compactability of crop material which exists on the basis of the relationship of the type of crop material, the crop material moisture content and the crop material length.

2. An agricultural harvester according to claim 1 **characterised in that** the reference harvesting aim is based on expert knowledge.

3. An agricultural harvester according to at least one of the preceding claims **characterised in that** the reference harvesting aim is stored in the form of at least one characteristic curve in the memory and evaluation unit (28).

4. An agricultural harvester according to at least one of the preceding claims **characterised in that** the prognosis about the attainability of an actual harvesting aim after evaluation is displayed on the input and display unit (23).

5. An agricultural harvester according to at least one of the preceding claims **characterised in that** at least one threshold value is stored in the memory and evaluation device (28), wherein a value falling below the threshold value represents a negative prognosis and a value exceeding the threshold value represents a positive prognosis.

6. An agricultural harvester according to at least one of the preceding claims **characterised in that** the threshold value is established by the operator (22) and/or is based on expert knowledge.

7. An agricultural harvester according to at least one of the preceding claims **characterised in that** in addition an operating parameter of a further vehicle involved in the harvesting process can be stored in the memory and evaluation device (28) for determining the threshold value, wherein the operating parameter is input into the memory and evaluation device (28) by the operator (22) himself by way of an input and display unit (23) and/or automatically by way of a data transfer device.

8. An agricultural harvester according to at least one of the preceding claims **characterised in that** at least a lower and an upper threshold value limit is associated with the at least one threshold value.

9. An agricultural harvester according to at least one of the preceding claims **characterised in that** in the case of a negative prognosis such operating parameters whose adaptation will lead to a positive evaluation are displayed on the input and display unit (23) and/or automatic operating parameter adaptation is implemented by the control device (24) having regard to the prognosis.

10. An agricultural harvester according to claim 9 **characterised in that** the setting trends for the operating parameters are displayed in addition to the operating parameters represented on the input and display unit (23).

11. An agricultural harvester according to one of the preceding claims **characterised in that** the operating parameters and/or the crop material parameters and/or the prognosis about the attainable actual harvesting aim and/or the evaluation result can be displayed on the input and display unit in the form of numbers and/or terms and/or icons.

## Revendications

1. Moissonneuse agricole comprenant différents organes de travail, une unité de saisie et d'affichage, une unité de mémorisation et d'exploitation et un dispositif de commande pour influencer des paramètres de fonctionnement réglables des organes de travail, dans laquelle on enregistre dans le dispositif de mémorisation et d'exploitation (28) de manière ré-interrogeable au moins un critère théorique et on en déduit, sur la base d'au moins un paramètre de récolte et de fonctionnement déterminé dans l'opération de récolte et du au moins un critère théorique, un pronostic sur la capacité d'atteindre un objectif de récolte réel et dans lequel le pronostic est pris en compte dans le réglage des paramètres de fonctionnement,
**caractérisée en ce que**
la moissonneuse agricole (2) est une hacheuse (1),
dans laquelle le au moins un critère théorique définit un objectif de récolte théorique accessible, qui représente la relation entre au moins un paramètre de fonctionnement et au moins un paramètre de récolte,
dans lequel l'objectif de récolte théorique est la compressibilité de la récolte, qui existe en raison de la relation entre le type de récolte, l'humidité de la récolte et la longueur de la récolte.

2. Moissonneuse agricole selon au moins l'une quelconque des revendications précédentes,
**caractérisée en ce que**
l'objectif de récolte théorique repose sur des avis d'experts.

3. Moissonneuse agricole selon au moins une des revendications précédentes,
**caractérisée en ce que**
l'objectif de récolte théorique est enregistré sous la forme d'une caractéristique dans l'unité de mémorisation et d'exploitation (28).

4. Moissonneuse agricole selon au moins l'une quelconque des revendications précédentes,
**caractérisée en ce que**
le pronostic sur l'accessibilité d'un objectif de récolte réel évalué sur l'unité de saisie et d'affichage (23) est affiché.

5. Moissonneuse agricole selon au moins l'une quelconque des revendications précédentes,
**caractérisée en ce que**
au moins une valeur de seuil est enregistrée dans le dispositif de mémorisation et d'exploitation (28), dans laquelle un passage en dessous de la valeur de seuil représente un pronostic négatif et un passage en dessus de la valeur de seuil représente un pronostic positif.

6. Moissonneuse agricole selon au moins l'une quelconque des revendications précédentes,
**caractérisée en ce que**
la valeur de seuil est définie par l'opérateur (22) et/ou repose sur des avis d'experts.

7. Moissonneuse agricole selon au moins l'une quelconque des revendications précédentes,
**caractérisée en ce que**
pour déterminer la valeur de seuil, on peut enregistrer en plus un paramètre de fonctionnement d'un autre véhicule participant à l'opération de récolte dans le dispositif de mémorisation et d'exploitation, dans laquelle le paramètre de fonctionnement est introduit par l'opérateur lui-même via une unité de saisie et d'affichage (23) et/ou automatiquement via un dispositif de transfert de données dans le dispositif de mémorisation et d'exploitation (23).

8. Moissonneuse agricole selon au moins l'une quelconque des revendications précédentes,
**caractérisée en ce que**
au moins une limite de valeur de seuil inférieure et une limite de valeur de seuil supérieure sont affectées à la au moins une valeur de seuil.

9. Moissonneuse agricole selon au moins l'une quelconque des revendications précédentes,
**caractérisée en ce que**
dans le cas d'un pronostic négatif, sont affichés sur l'unité de saisie et d'affichage (23) les paramètres de fonctionnement et/ou une adaptation des paramètres de fonctionnement est effectuée par le dispositif de commande (24) en tenant compte du pronostic.

10. Moissonneuse agricole selon la revendication 9,
**caractérisée en ce que**
en plus des paramètres de fonctionnement représentés sur l'unité de saisie et d'affichage, les tendances des réglages pour les paramètres de fonctionnement sont visualisées.

11. Moissonneuse agricole selon au moins l'une quelconque des revendications précédentes,
**caractérisée en ce que**
les paramètres de fonctionnement et/ou les paramètres de récolte et/ou le pronostic sur l'objectif de récolte réel accessible et/ou le résultat des évaluations peuvent être affichés sous la forme de chiffres et/ou de concepts et/ou de pictogrammes sur l'unité d'entrée et d'affichage.
